Europäisches Patentamt

European Patent Office

Office européen des brevets

(19)

(11) **EP 1 592 118 A1**

(12) ## EUROPEAN PATENT APPLICATION

(43) Date of publication:
**02.11.2005 Bulletin 2005/44**

(51) Int Cl.$^7$: **H02M 3/158**

(21) Application number: **05103345.4**

(22) Date of filing: **25.04.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **26.04.2004 JP 2004130283**

(71) Applicant: **TEXAS INSTRUMENTS JAPAN LTD.**
**Shinjuki-ku, Tokyo 160-8366 (JP)**

(72) Inventor: **Ikezawa, Katsuya**
**563-0041, Osaka (JP)**

(74) Representative: **Holt, Michael et al**
**Texas Instruments Ltd.,**
**PO Box 5069**
**Northampton, Northamptonshire NN4 7ZE (GB)**

(54) **Switching Power Supply Device**

(57)     A switching power supply device 1 is provided to reduce ripple voltage generated in the output Vout when switching between step-down and step-up control modes. In response to detection of input voltage Vin by input voltage detector 20, control 10 (CTRL) causes switching between step-down and step-up voltage control modes. In each control mode, a clock signal corresponding to output voltage Vout is generated by comparator 50 and fed back to a primary circuit (PRI) and secondary circuit (SEC), comprising two serially connected switching elements Tr1, Tr2 and Tr3, Tr4, joined by an inductor L. A multiplexer 60 switches the input polarities of transconductance amplifier 40 corresponding to the control mode.

FIG. 1

EP 1 592 118 A1

**Description**

FIELD OF THE INVENTION

The present invention relates to switching power supply devices, in general; and, in particular, to a switching power supply device having an H-bridge type switching circuit with two semiconductor switching elements set on each of the input and output sides.

BACKGROUND OF THE INVENTION

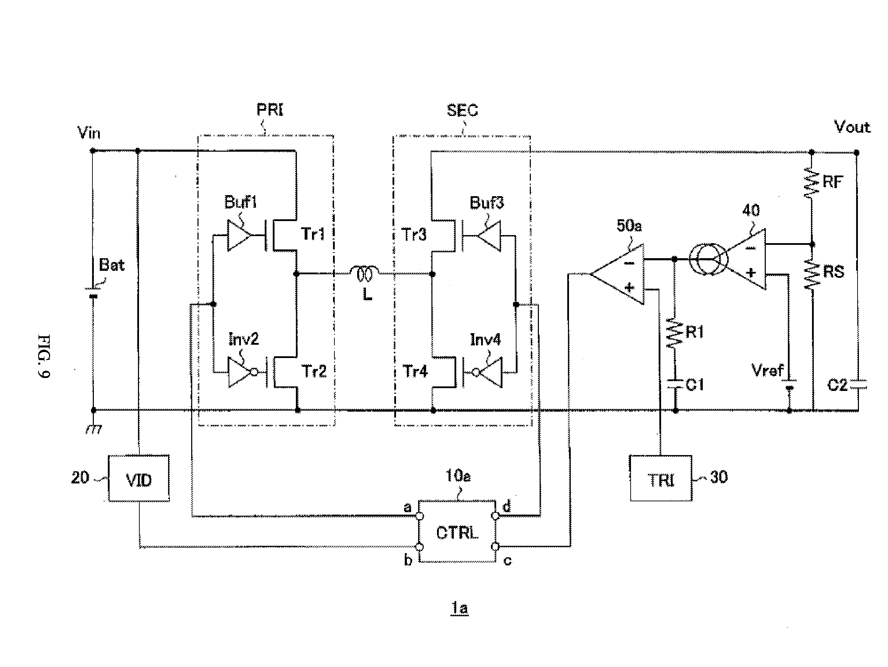

FIG. 9 (prior art) shows an example existing switching power supply device 1a. The shown switching power supply device 1a is a power supply device for obtaining a prescribed stable DC voltage from a DC voltage that varies over a wide range and is obtained from a nickel-mercury battery or other battery (Bat in the figure) set on the input side. As shown, switching power supply device 1a includes an H-bridge type switching circuit comprising semiconductor switching elements Tr1, Tr2 (shown as transistors) set on the input side and semiconductor switching elements Tr3, Tr4 (shown as transistors) set on the output side, connected via inductor L. By controlling the ON state of the switching elements, it is possible to realize step-up or step-down voltage control. For example, the switching elements can be controlled so as to obtain a stable 3V output voltage from an input voltage that varies over a wide range of 1.5 - 5V.

A PWM (pulse width modulated) control signal is fed from control element 10a via buffer Buf1 and inverter Inv2 to the switching elements Tr1 and Tr2 on the input side. Thus, switching elements Tr1 and Tr2 are controlled so that one is ON while the other is OFF according to the pulse width of the PWM control signal fed to the control. The controller on the input side comprised of switching elements Tr1, Tr2, buffer Buf1 and inverter Inv2 are referred to as the primary circuit (PR1) in Figure 9.

The PWM control signal is also fed from control element 10a via buffer Buf3 and inverter Inv4 to switching elements Tr3 and Tr4 set on the output side. Thus, switching elements Tr3 and Tr4 are controlled so that one is ON while the other is OFF according to the pulse width of the PWM control signal fed to the control. The controller on the output side comprised of switching elements Tr3, Tr4, buffer Buf3 and inverter Inv4 are referred to as the secondary circuit (SEC) in Figure 9.

Input voltage detector (VID) 20 detects input voltage Vin based on a prescribed reference voltage, and feeds the detected input voltage Vin as an input to control 10a. Control 10a switches its control mode in response to the input voltage Vin, thus provided.

Transconductance amplifier 40 is a so-called Gm amplifier. As shown in FIG. 9, a prescribed reference voltage Vref is input to the positive input terminal of transconductance amplifier 40, and a voltage obtained by voltage dividing output voltage Vout by resistors RF and RS is input to its negative terminal. Resistor R1 and capacitor C1 are connected in series between the output of t transconductance amplifier 40 and ground. Resistor R1 generates a voltage corresponding to the current output from transconductance amplifier 40. Capacitor C1 performs phase compensation and has a relatively large capacitance, such as about 10 nF.

The output terminal of transconductance amplifier 40 is also connected to the negative input terminal of comparator 50a. This sets the negative terminal of comparator 50a to the phase compensated output voltage of transconductance amplifier 40. Triangle wave generator 30 generates a triangular wave signal of prescribed period and amplitude which is provided as an input to the positive input terminal of comparator 50a. As a result, comparator 50a generates a clock signal with a duty ratio corresponding to the voltage of the output terminal of transconductance amplifier 40. As shown in FIG. 9, the output terminal of comparator 50a is connected to input terminal c of control 10a and the clock signal is inverted or not inverted corresponding to the control mode and fed as an FB_PWM signal to either the primary PRI or secondary SEC circuit.

Control 10a switches the control mode corresponding to input voltage Vin detected by input voltage detector 20. That is, when input voltage Vin is higher than target output voltage Vout (Vin > Vout), control is performed to switch the control mode to the step-down control mode. And, on the other hand, when input voltage Vin is lower than target output voltage Vout (Vin < Vout), control is performed to switch the control mode to the step-up control mode. More specifically, in the step-down control mode, control 10a takes the clock signal sent from comparator 50a as an FB_PWM signal, and feeds it to the primary circuit, and, simultaneously, feeds an FF_PWM signal with a pulse width that can obtain a virtual output voltage Vout (virtual Vout) to the secondary circuit. Virtual voltage Vout is the average voltage on the side of the secondary circuit, and it satisfies the following relationship:

$$\text{Virtual Vout} = \text{Vin} \times \text{FBduty} \qquad (1)$$

On the other hand, in the step-up control mode, control 10a takes the signal obtained by inverting the clock signal sent from comparator 50a as an FB_PWM signal and feeds it to the secondary circuit, and, simultaneously, it feeds an FF_PWM signal with a pulse width that can obtain a virtual input voltage Vin (virtual Vin) to the primary circuit. Virtual voltage Vin is the average voltage on the side of the primary circuit, and satisfies the following relationship:

$$\text{Virtual Vin} = \text{Vout} \times \text{FBduty} \qquad (2)$$

The processing for inverting the clock signal output from comparator 50a and generating the FB_PWM signal is performed by a logic circuit included in control 10a and containing an inverter.

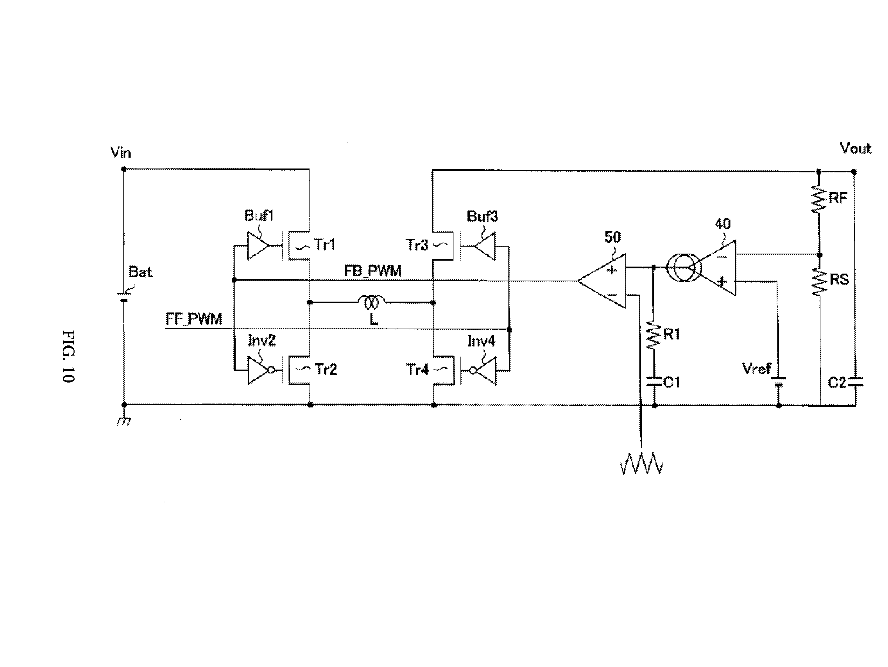

FIG. 10 is an equivalent circuit indicating the connection state and feeding state of a PWM signal when switching power supply device 1a operates in the step-down control mode. In the step-down control mode with input voltage Vin higher than output voltage Vout, as indicated, an FB_PWM signal with duty ratio (FBduty) corresponding to output voltage Vout is fed to the primary circuit, and, simultaneously, an FF_PWM signal is fed to the secondary circuit. As a result, switching power supply device 1a performs step-down control to obtain target output voltage Vout.

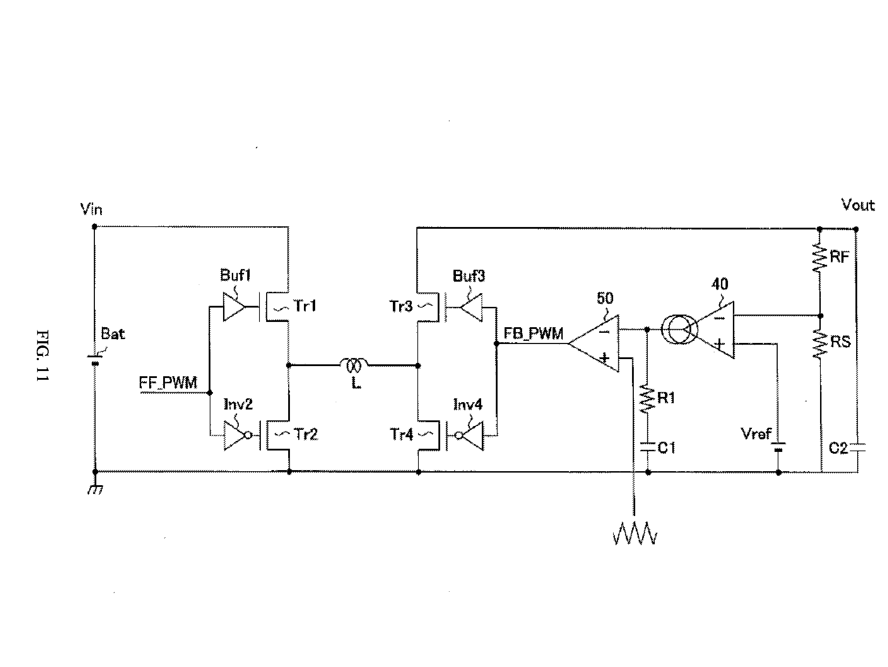

FIG. 11 illustrates the connection state and the PWM signal feeding state when switching power supply device 1a operates in the step-up control mode. In this mode, the clock signal output from comparator 50a is inverted, and the resulting signal is fed as an FB_PWM signal to the secondary circuit. For simplicity of description, this inversion is represented by showing the positive and negative terminals reversed in FIG. 11 relative to their representation in FIG. 10, and considering that the output is fed in the same way directly to the secondary circuit. When input voltage Vin becomes lower then output voltage Vout, the control mode becomes the step-up control mode, and, as shown in the FIG. 11, while the FB_PWM signal of duty ratio (FBduty) corresponding to the output voltage is fed to the secondary circuit, the FF_PWM signal is fed to the primary circuit. As a result, switching power supply device 1a performs step-up control to obtain target output voltage Vout.

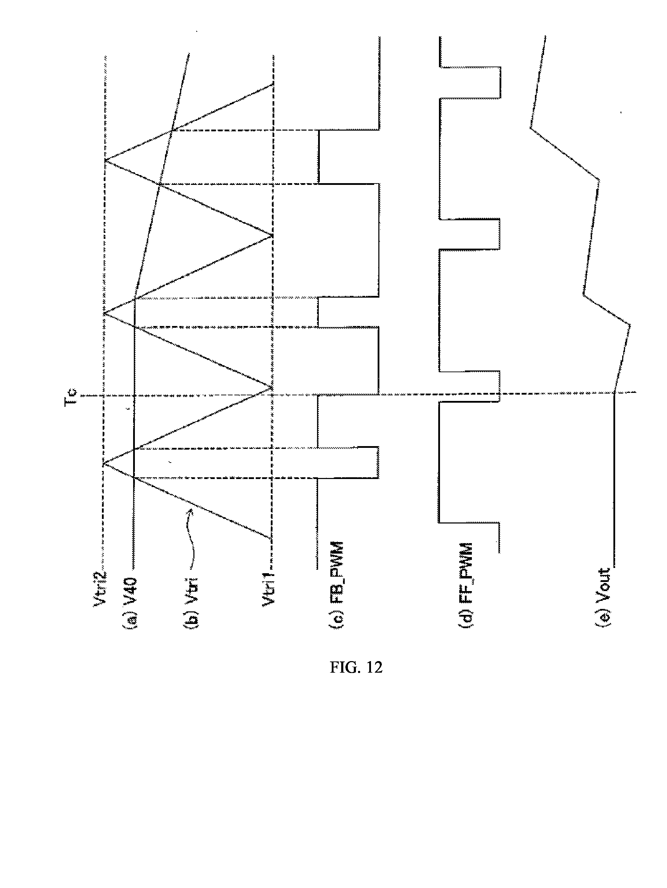

When the control mode switching occurs in the described prior art switching power supply device 1a, however, a ripple voltage appears at the output of switching power supply device 1a due to the transient characteristics of the voltage at the output terminal of transconductance amplifier 40 during switching. That is, due to the presence of phase compensating capacitor C1 with a relatively large capacitance, it is difficult to realize stable control of output voltage Vout in the transient region from immediately after switching of the control mode to stabilization of the voltage at the output terminal of transconductance amplifier 40. This problem can be seen in more detail with reference to FIG. 12.

FIG. 12 illustrates the timing charts of various signal waveforms before and after switching time Tc of the control mode. Signal (a) shows voltage V40 at the output terminal of transconductance amplifier 40; signal (b) shows the triangular voltage signal Vtri input to comparator 50a; signal (c) shows the FB_PWM signal; signal (d) shows the FF_PWM signal; and signal (e) shows the output voltage Vout. The maximum amplitude of triangular voltage signal Vtri is indicated as Vtri2, and the minimum as Vtri1.

As shown in FIG. 12, before time Tc, the relationship input voltage Vin > output voltage Vout exists, and control 10a operates in the step-down control mode. After time Tc, the relationship input voltage Vin < output voltage Vout exists, and control 10a operates in the step-up control mode. In the illustrated case, duty ratio FBduty of the FB_PWM signal is always set at the target value of 0.9. Before time Tc, in order to stabilize voltage V40 of the output terminal of transconductance amplifier 40, an FB_PWM signal with duty ratio FBduty, shown by the following equation, is fed to the primary circuit:

$$\text{FB duty} = (V40 - Vtri1)/(Vtri2 - Vtri1) \qquad (3)$$

For example, if Vtri2 = 1.45V and Vtri1 = 0.85V, when duty ratio FBduty of the FB_PWM signal is 0.9, then V40 = 1.39V in accordance with equation (3). Then, at time Tc when input voltage Vin falls to obtain the relationship of input voltage Vin < output voltage Vout, control 10a starts the step-up control mode of operation. That is, immediately after time Tc, the clock signal output from comparator 50a is inverted and fed to the secondary circuit.

If a phase compensating capacitor C1 is not connected to the output terminal of transconductance amplifier 40, control is performed so that voltage V40 at its output terminal quickly changes from 1.39 V (FBduty = 0.9) before time Tc to 0.91 V. Also, in the step-up control mode, because control 10a inverts the clock signal output from comparator 50a to generate an FB_PWM signal, 0.91 V corresponds to FBduty = 0.9 in the step-up control mode. That is, according to equation (2), an FF_PWM signal is fed to the primary circuit such that virtual Vin becomes 2.7 V (virtual Vin = output voltage Vout x FBduty = 3 x 0.9 = 2.7 V) . In practice, however, because a phase compensating capacitor C1 is present, as shown by signal (a) in FIG. 12, voltage V40 of the output terminal immediately after time Tc falls gradually, and it takes a certain time to reach the stable point of V40 = 0.91 V.

For example, if output voltage V40 immediately after time Tc is the same as before time Tc, that is, 1.39 V, in the step-up control mode, because control 10a inverts the clock signal output from comparator 50a to generate an FB_PWM signal, the duty ratio changes from 0.9 to 0.1 immediately after switching. On the other hand, as explained above, since an FF_PWM signal is fed to the primary circuit so that virtual Vin becomes 2.7 V, according to equation (2), output voltage Vout becomes:

$$\text{Vout} = \text{Virtual Vin/FBduty} = 2.7V/ 0.1 = 27V \qquad (4)$$

and output voltage Vout overshoots.

The overshoot of output voltage Vout is cancelled when capacitor C1 is sufficiently discharged and voltage V40 of the output terminal of transconductance amplifier 40 reaches a stable level of 0.91 V (corresponding to an FBduty of 0.9 in the step-up control mode), yet a ripple voltage is observed during this period. That is, the duty ratio of the FB_PWM signal is set so that it is always 0.9. However, in practice, in the transient region immediately after switching of the control mode, a state with a duty ratio of 0.1 takes place, and a ripple voltage is observed during this period.

As explained above, for a prior art switching power supply device having a transconductance amplifier, at the time of switching from the step-down control mode to the step-up control mode, because a capacitor with a relatively large capacitance for phase compensation is connected to the output terminal of the transconductance amplifier, due to the influence of the capacitor, the voltage of the output terminal of the amplifier cannot immediately follow the desired value. As a result, an undesirable ripple voltage takes place in the output.

It is an object of the present invention to mitigate one or more of the aforementioned problems of the prior art by providing a switching power supply device that has a reduced ripple voltage at the output when switching between the step-up control mode and step-down control mode.

SUMMARY OF THE INVENTION

Accordingly, the present invention provides a type of switching power supply device characterized by the fact that it has the following parts: a first switch comprised of plural switching elements for controlling the ON state of the input side; a second switch comprised of plural switching elements for controlling the ON state of the output side; a feedback pulse generator for generating a feedback pulse with a pulse width corresponding to the output voltage; a first control that performs the following operation: it switches plural control modes, which includes a step-down control mode and a step-up control mode, corresponding to the input voltage; in the step-down control mode, the feedback pulse is sent to the first switch; and, in the step-up control mode, the feedback pulse is sent to the second switch, and a second control that controls the feedback pulse generator such that the duty ratio of the feedback pulse is constant and independent of the plural control modes.

As a preferred implementation, the feedback pulse generator comprises a transconductance amplifier having a first input terminal connected to receive a voltage corresponding to the output voltage and a second input terminal connected to receive a reference voltage; the second control inverts the polarities of the first and second terminals of the transconductance amplifier in correspondence with the switching between the step-down control mode and the step-up control mode.

Also, as a preferred implementation, the feedback pulse generator comprises a comparator circuit that compares the voltage at the node connected to a capacitive element with a triangular signal having a prescribed period; and the transconductance amplifier is set such that the output terminal of the transconductance amplifier is positioned nearer the output side than the node.

According to the switching power supply device of the present invention, for the second control, the input polarity of the transconductance amplifier of the feedback pulse generator is switched in correspondence with switching of the control mode. Consequently, an appropriate feedback is applied corresponding to the applied control mode, a stable constant current is output, and the duty ratio of the feedback pulse is constant independent of the control mode.

Also, for the switching power supply device of the present invention, the comparator of the feedback pulse generator compares the voltage of the output terminal of the transconductance amplifier connected to the capacitive element with the triangular signal with a prescribed period to generate the feedback pulse. Consequently, the voltage level input to the comparator is stable independent of the charging state of the capacitive element. As a result, the duty ratio of the feedback pulse becomes constant.

BRIEF DESCRIPTION OF THE DRAWINGS

FIG. 1 illustrates an example of a switching power supply device according to an embodiment of the present invention.
FIG. 2 illustrates an example configuration the multiplexer of the switching power supply device in the embodiment.
FIG. 3 illustrates an example circuit configuration of the control when the switching power supply device operates in the step-down/step-up control mode.
FIG. 4 illustrates an equivalent circuit when the switching power supply device of the embodiment operates in the step-down control mode.
FIG. 5 illustrates an equivalent circuit when the switching power supply device of the embodiment operates in the step-up control mode.
FIG. 6 illustrates timing charts of signal waveforms before and after switching time Tc of the control mode in the switching power supply device of the embodiment; wherein (a) shows an example voltage V40 signal at the output terminal of transconductance amplifier 40; (b) shows an example triangular voltage signal Vtri input to comparator 50; (c) shows an example FB_PWM signal; (d) shows an example FF_PWM signal, and (e) shows an example output voltage Vout.
FIG. 7 illustrates an equivalent circuit when the switching power supply device in the modified example operates in the step-down control mode.
FIG. 8 illustrates an equivalent circuit when the switching power supply device in the modified example operates in the step-up control mode.

FIG. 9 (prior art) shows an example configuration of a switching power supply device in accordance with the prior art.

FIG. 10 (prior art) shows the connection state and feeding state of the PWM signal when the prior art switching power supply device of FIG. 9 operates in the step-down control mode.

FIG. 11 (prior art) shows the connection state and feeding state of the PWM signal when the prior art switching power supply device of FIG. 9 operates in the step-up control mode.

FIG. 12 (prior art) shows timing charts of signal waveforms before and after switching time Tc of the control mode for the prior art switching power supply device of FIG. 9, corresponding to the waveforms (a) through (e) of FIG. 6.

In the drawings, the reference numerals 1, 1a represent switching power supply devices; 10, 10a represent a control (CTRL); 11-14 represent an analog switch; 15 represents a comparator (COMP); 16 represents a FF_PWM signal generator; 17 represents a FB_PWM signal generator; 20 represents an input voltage detector (VID); 30 represents a triangular wave signal generator (TRI) ; 40 represents a transconductance amplifier; 50, 50a represent a comparator; 60 represents a multiplexer (MPX); 61-64 represent an analog switch, and 65 represents a comparator (COMP).

According to the present invention, the ripple voltage generated at the output when switching is performed between the step-up control mode and step-down control mode can be reduced. Consequently, it is possible to feed a stable power supply at all times to the load connected to the output terminal.

DESCRIPTION OF THE EMBODIMENTS

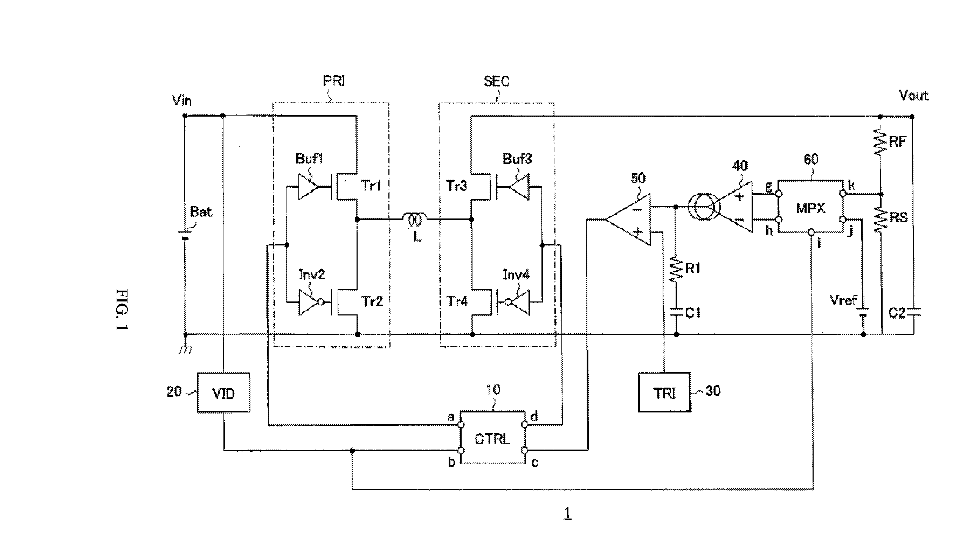

FIG. 1 illustrates an example configuration of an embodiment of switching power supply device 1 in accordance with the principles of the present invention. The illustrated switching power supply device 1 is a power supply device usable for obtaining a prescribed stable DC voltage based on a DC voltage over a wide range obtained from a battery (Bat in the figure), such as a nickel-mercury battery, set on the input side.

As shown in FIG. 1, switching power supply device 1 is comprised of an H-bridge type switching circuit including semiconductor switching elements Tr1, Tr2 set on the input side, and connected via an inductor L to semiconductor switching elements Tr3, Tr4 set on the output side. By controlling the ON state of the semiconductor switching elements, a step-up control mode and step-down control mode can be realized. For example, it is possible to control the semiconductor switching elements to obtain a stable 3 V output voltage based on an input voltage over a wide range of 1.5 - 5 V.

The illustrated primary circuit (designated as PRI) and secondary circuit (designated as SEC) are example embodiments, respectively, of the first switch and second switch of the present invention. Control (CTRL) 10 is an embodiment of the first control of the present invention. Multiplexer (MPX) 60 is an embodiment of the second control of the present invention. Transconductance amplifier 40 and comparator 50 comprise an embodiment of the feedback pulse generator of the present invention.

A PWM (pulse width modulated) control signal is fed from control 10 via buffer Buf1 and inverter Inv2, respectively, to semiconductor switching elements Tr1 and Tr2 set on the input side. Thus, semiconductor switching elements Tr1 and Tr2 are controlled such that one of them is ON and the other is OFF in correspondence with the pulse width of the fed PWM control signal. The controller on the input side, comprised of semiconductor switching elements Tr1, Tr2, buffer Buf1 and inverter Inv2 in FIG. 1, is referred to as the primary circuit (PRI).

The PWM control signal is also fed from control 10 via buffer Buf3 and inverter Inv4, respectively, to semiconductor switching elements Tr3 and Tr4 set on the output side. Thus, semiconductor switching elements Tr3 and Tr4 are controlled such that one of them is ON and the other is OFF in correspondence with the pulse width of the fed PWM control signal. The controller on the input side, comprised of semiconductor switching elements Tr3, Tr4, buffer Buf3 and inverter Inv4 in FIG. 1, is referred to as the secondary circuit (SEC).

Input voltage detector 20 always detects input voltage Vin based on a prescribed reference voltage, and feeds the detected input voltage Vin to control 10 and multiplexer 60. Control 10 switches the control mode in correspondence with input voltage Vin detected by input voltage detector 20. As shown in FIG.1, multiplexer 60 comprises five terminals g through k, and, corresponding to detected voltage Vin of input voltage detector 20 input at terminal i, control is performed to switch the connection state between terminals g and h and terminals k and j. More specifically, when input voltage Vin is higher than target output voltage Vout (Vin > Vout), control is performed such that an ON connection exists between terminals g and k and between terminals h and j. On the other hand, when input voltage Vin is lower than target output voltage Vout (Vin < Vout), control is performed such that an ON connection exists between terminals g and j and between terminals h and k.

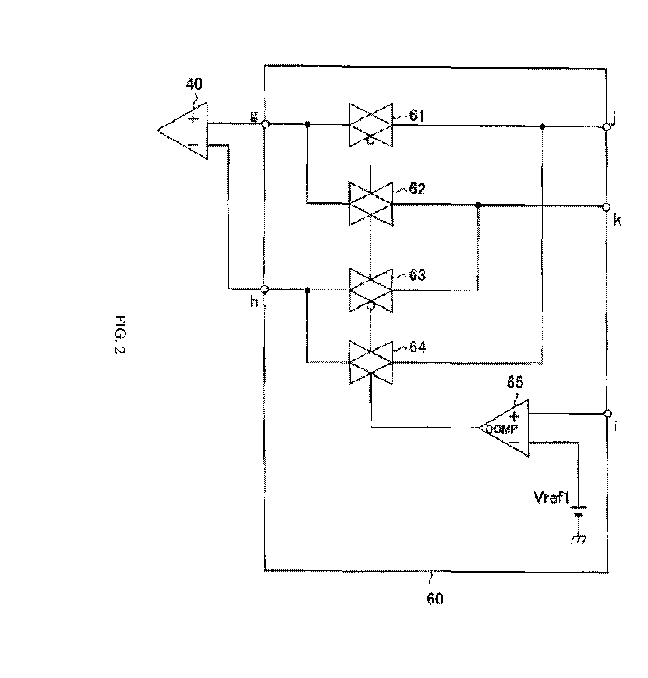

FIG. 2 illustrates an example circuit configuration for multiplexer 60. As shown in FIG. 2, multiplexer 60 may be comprised of four analog switches 61-64 and comparator (COMP) 65. In the shown configuration, when detected voltage Vin of input voltage detector 20 input at terminal i is higher than reference voltage Vref1 (set at target output voltage Vout), comparator 65 outputs the H level, so that analog switches 62 and 64 are turned ON, and analog switches 61 and 63 are turned OFF. As a result, the connection between terminals g and terminal k is ON, and the connection between terminals h and j is ON. Similarly, when detected voltage Vin of input voltage detector 20 input from terminal i is lower than reference voltage Vref1 (set at target output voltage Vout), comparator 65 outputs the L level, so that analog switches 61 and 63 are turned ON, and analog switches 62 and 64 are turned OFF. As a result, the connection between terminals g and terminal j is ON, and the connection between terminals h and k is ON.

Transconductance amplifier 40 is a so-called Gm amplifier. As shown in the FIGS. 1 and 2, the positive polarity ("+" or "plus") terminal of transconductance amplifier 40 is connected to terminal g of multiplexer 60, and the negative polarity ("-" or "minus") terminal is connected to terminal h of multiplexer 60. Consequently, in transconductance amplifier 40, prescribed reference voltage Vref or a voltage obtained by voltage dividing output voltage Vout by resistors RF and RS is input as it is switched between the positive terminal and negative terminal corresponding to detected voltage Vin of input voltage detector 20.

Resistor R1 and capacitor C1 are connected in series between the output terminal of transconductance amplifier 40 and ground. Resistor R1 generates a voltage corresponding to the current output from transconductance amplifier 40, and capacitor C1 is a capacitive element that provides phase compensation. Phase compensating capacitor C1 should have a relatively large capacitance, such as a capacitance of about 10 nF. The output terminal of transconductance amplifier 40 is also connected to the negative terminal of comparator 50. Consequently, the negative terminal of comparator 50 becomes the phase compensated voltage of the output terminal of transconductance amplifier 40. On the other hand, a triangular wave signal at a prescribed period and with a prescribed amplitude and generated in triangle signal generator 30 is input to the positive terminal of comparator 50. As a result, comparator 50 generates a clock signal with a duty ratio corresponding to the voltage of the output terminal of transconductance amplifier 40. As shown in FIG. 1, the output terminal of comparator 50 is connected to external terminal c of control 10. The clock signal is fed as an FB_PWM signal to one of the primary circuit and secondary circuit corresponding to the control mode.

Different from switching power supply device 1a in the prior art, for switching power supply device 1 of the present embodiment, independent of the control mode, the clock signal generated by comparator 50 is not subject to inversion treatment. Control 10 switches the following three control modes corresponding to input voltage Vin detected by input voltage detector 20.

(1) Step-down control mode

For example, if input voltage Vin is in the range of 4 - 5 V and the target output voltage Vout is 3 V, the step-down control mode of operation is performed. In the step-down control mode, semiconductor switching element Tr3 of the secondary circuit is always ON, semiconductor switching element Tr4 is always OFF, and, by controlling the duty ratio of the clock signal provided to the primary circuit corresponding to output voltage Vout, the average voltage on the input side (virtual voltage Vin) is controlled.

(2) step-up control mode

For example, if input voltage Vin is in the range of 1.5 - 2.7 V and the target output voltage Vout is 3 V, the step-up control mode of operation is performed. In the step-up control mode, semiconductor switching element Tr1 of the secondary circuit is always ON, semiconductor switching element Tr2 is always OFF, and, by controlling the duty ratio of the clock signal provided to the secondary circuit corresponding to output voltage Vout, the average voltage on the output side (virtual voltage Vout) is controlled.

(3) Step-down/step-up control mode

For example, if input voltage Vin is in the range of 2.7 - 4 V and the target output voltage Vout is 3 V, the step-down/step-up control mode is performed. In the step-down/step-up control mode, depending on the relationship between input voltage Vin and output voltage Vout, control is performed for successive switching of the step-down control mode and step-up control mode. That is, in the step-down/step-up control mode, when it is determined that input voltage Vin is higher than target output voltage Vout (Vin > Vout), control is performed to switch the control mode to the step-down control mode. On the other hand, when it is determined that input voltage Vin is lower than target output voltage Vout (Vin < Vout), control is performed to switch the control mode to the step-up control mode. In this case, different from the step-down control mode (1) and step-up control mode (2), the duty ratio of the clock signal provided to both the primary circuit and secondary circuit is controlled.

Switching power supply device 1 of the present embodiment has a characteristic feature of the switching operation of the control mode in the step-down/step-up control mode. Thus, in the following, explanation is provided for control 10 in the step-down/step-up control mode.

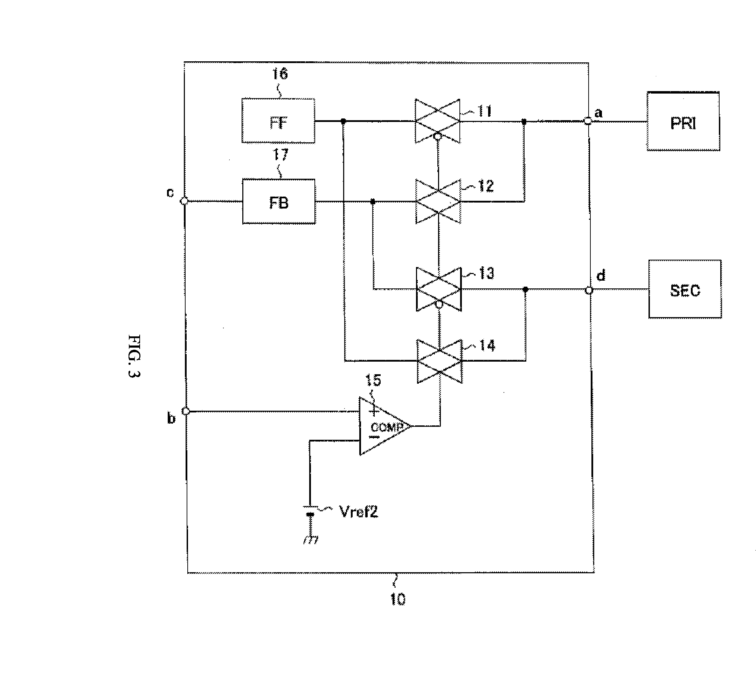

When the step-down control mode/step-up control mode is mentioned, it refers to a step-down control mode/step-up control mode in the step-down and step-up control modes. FIG. 3 is a diagram illustrating an example of the configuration of the circuit of control 10 that operates in the aforementioned step-down/step-up control mode.

As shown in FIG. 3, control 10 may comprise four analog switches 11 - 14, comparator (COMP) 15, FF_PWM signal generator 16, and FB_PWM signal generator 17. FF_PWM signal generator 16 outputs an FF_PWM signal with a prescribed duty ratio independent of the step-down control mode/step-up control mode at a prescribed timing, such as the inverted timing of the timing of the output of the FB_PWM signal. In FB_PWM signal generator 17, a clock signal fed from comparator 50 is input via terminal c, and, after control of the timing, an FB_PWM signal with a duty ratio equal to that of the input clock signal is output.

In the example circuit con figuration shown in FIG. 3, when detected voltage Vin of input voltage detector 20 input from terminal b is higher than reference voltage Vref2 (set at target output voltage Vout), comparator 15 outputs the H (high) level, so that analog switches 12 and 14 come ON, and analog switches 11 and 13 go OFF. As a result, the FF_PWM signal output from FF_PWM signal generator 16 is fed via terminal d to the secondary circuit, and the FB_PWM signal output from FB_PWM signal generator 17 is fed via terminal a to the primary circuit. Also, when detected voltage Vin of input voltage detector 20 input from terminal i is lower than reference voltage Vref2 (set at target output voltage Vout), comparator 15 outputs the L (low) level, so that analog switches 11 and 13 come ON, and analog switches 12 and 14 go OFF. As a result, the FF_PWM signal output from FF_PWM signal generator 16 is fed via terminal a to the primary circuit, and the FB_PWM signal output from FB_PWM signal generator 17 is fed via terminal d to the secondary circuit. Consequently, in the step-down control mode, control 10 feeds the clock signal (FB_PWM signal) output from comparator 50 to the primary circuit, and, simultaneously, it feeds the FF_PWM signal with an appropriate pulse width to obtain the virtual output voltage Vout (virtual Vout) at the secondary circuit.

Virtual Vout is the average voltage on the side of the secondary circuit, and the following relationship is established:

$$\text{Virtual Vout} = \text{Vin} \times \text{FB duty} \qquad (5)$$

On the other hand, in the step-up control mode, control 10 feeds the clock signal (FB_PWM signal) output from comparator 50 to the secondary circuit, and, simultaneously, it feeds the FF_PWM signal with an appropriate pulse width for obtaining virtual input voltage Vin (virtual Vin) at the primary circuit.

Also, virtual Vin is the average voltage on the side of the primary circuit, and the following relationship is established:

$$\text{Virtual Vin} = \text{Vout} \times \text{FBduty} \qquad (6)$$

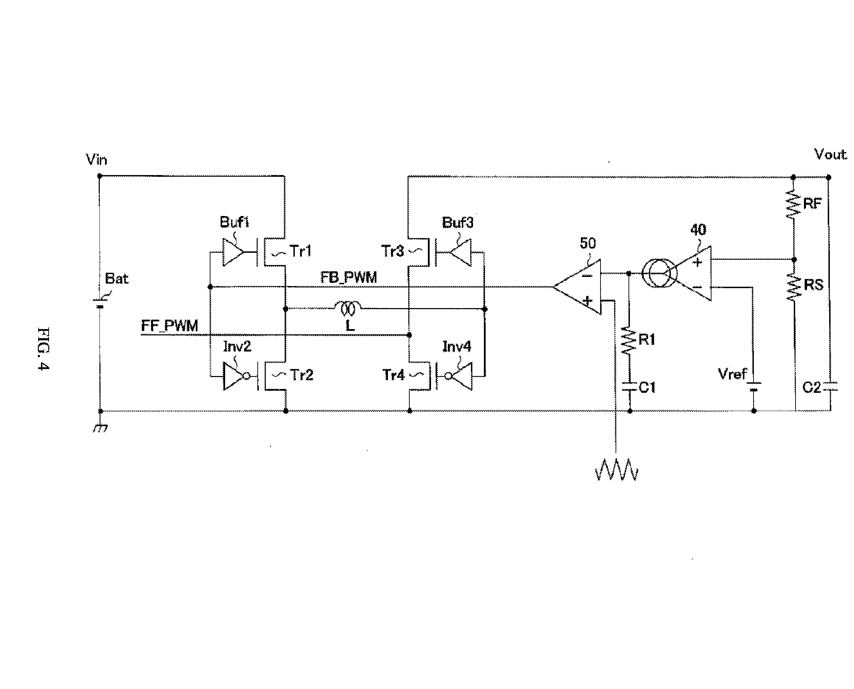

FIG. 4 is a diagram illustrating the equivalent circuit showing the connection state and the feeding state of the PWM signal when switching power supply device 1 operates in the step-down control mode. As shown in the figure, in the step-down control mode with input voltage Vin higher than target output voltage Vout, while an FB_PWM signal with duty ratio (FBduty) corresponding to output voltage Vout is fed to the primary circuit, an FF_PWM signal is fed to the secondary circuit. As a result, switching power supply device 1 performs step-down control to obtain target output voltage Vout. Also, when input voltage Vin is higher then target output voltage Vout, the connection state becomes as shown in the figure, and multiplexer 60 operates.

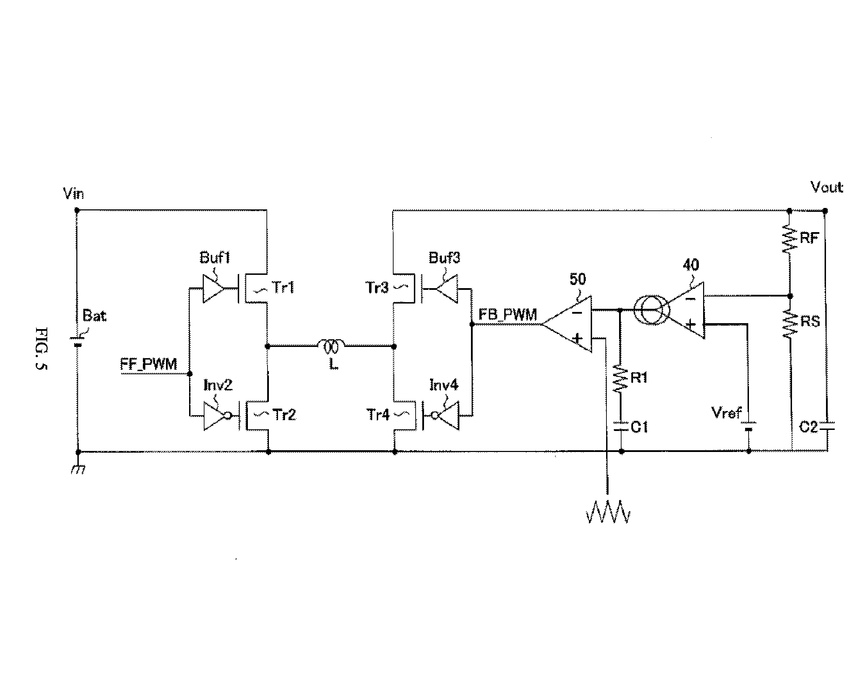

FIG. 5 is a diagram illustrating the equivalent circuit showing the connection state and the feeding state of the PWM signal when switching power supply device 1 operates in the step-up control mode. When input voltage Vin is lower than target output voltage Vout, the control mode becomes the step-up control mode. As shown in the figure, while an FB_PWM signal of the duty ratio (FBduty) corresponding to the output voltage is fed to the secondary circuit, an FF_PWM signal is fed to the primary circuit. As a result, switching power supply device 1 performs the step-up control mode of operation to obtain target output voltage Vout. In this case, immediately after input voltage Vin becomes lower than target output voltage Vout, multiplexer 60 switches the connection state of the positive terminal/negative terminal of transconductance amplifier 40. However, in order to simplify the description, in transconductance amplifier 40 shown in FIG. 5, the connection state of the various terminals with the exterior is the same as that in FIG. 4, and the positive terminal and negative terminal are reversed in the description with respect to transconductance amplifier 40 shown in FIG. 4.

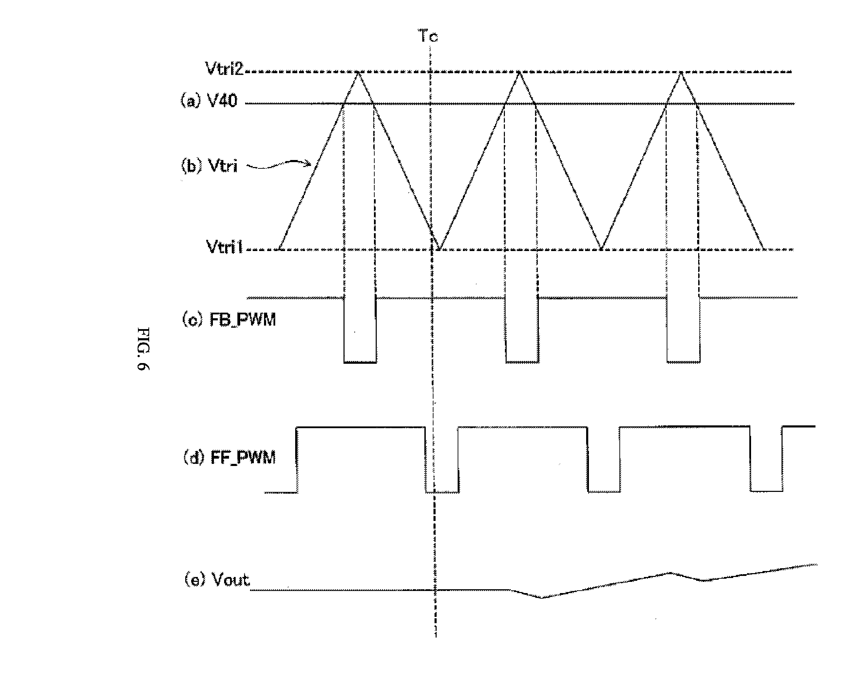

In the following, explanation is provided for the operation of switching power supply device 1 when control 10 switches the mode from the step-down control mode to the step-up control mode with reference to FIG. 6.

FIG. 6 is a timing chart illustrating signal waveforms before and after switching time Tc of the control mode. Signal (a) shows voltage V40 at the output terminal of transconductance amplifier 40; signal (b) shows triangular signal Vtri input to comparator 50; signal (c) shows the FB_PWM signal; signal (d) shows the FF_PWM signal; and signal (e) shows output voltage Vout. The maximum voltage of triangular signal Vtri is designated and shown as Vtri2, and its minimum voltage is designated and shown as Vtri1.

As shown in FIG. 6, before time Tc, the relationship of input voltage Vin > output voltage Vout exists, and control 10 operates in the step-down control mode. After time Tc, the relationship of input voltage Vin < output voltage Vout exists, and control 10 operates in the step-up control mode. In this case, duty ratio FBduty of the FB_PWM signal is continuously set at 0.9.

Before time Tc, in order to stabilize voltage V40 of the output terminal of transconductance amplifier 40, an FB_PWM signal with duty ratio FBduty shown in following equation (7) is fed to the primary circuit:

$$FBduty = 1 - (V40 - Vtri1) / (Vtri2 - Vtri1) \qquad (7)$$

For example, if Vtri2 = 1.45 V and Vtri1 = 0.85 V, when duty ratio FBduty of the FB_PWM signal is the 0.9, according to the formula 7, one has V40 = 0.91 V. Then, at time Tc when input voltage Vin falls to have the relationship of input voltage Vin > target output voltage Vout, control 10 starts the operation of switching to the step-up control mode of operation, and FBduty is controlled to be maintained at 0.9. In this case, because multiplexer 60 performs the switching operation for the connection state to the positive terminal/negative terminal of transconductance amplifier 40, as shown by signal (a) in FIG. 6, it is possible to realize a configuration in which, while voltage V40 of the output terminal of transconductance amplifier 40 is kept at 0.91 V (FBduty = 0.9), feedback is applied to the control modes before and after the switching. In this case, before and after switching of the control mode, there is no change in voltage V40 of the output terminal of transconductance amplifier 40, and, before and after switching, there is no change in the charging state of phase compensating capacitor C1 connected to the output terminal of transconductance amplifier 40. That is, before and after switching, the voltage of capacitor C1 is kept at 0.91 V. Thus, immediately after time Tc, the value of duty ratio FBduty is not influenced by the charging voltage of capacitor C1. Consequently, the relationship (6) can always be maintained. As a result, as shown by signal (e) in FIG. 6, the ripple generated in output voltage Vout is very small.

In the above, explanation has been provided for the case when duty ratio FBduty is set at 0.9 as an example. However, one can select any duty ratio. When the duty ratio is selected at will, transconductance amplifier 40 outputs a current corresponding to the duty ratio, and the voltage at its output terminal is kept constant. Consequently, for any selected duty ratio, the ripple generated in output voltage Vout is very small.

In the above explanation of embodiment, operation in the case of switching from the step-down control mode to the step-up control mode has been described. The same effect can be realized in reducing the ripple voltage generated on the output when switching is made from the step-up control mode to the step-down control mode.

For example, as an example of the results of simulation, when a comparison is made of the ripple voltage that is generated in switching from the step-down control mode to the step-up control mode, while it is 1.4 V in the switching power supply device of the prior art, it is 13 mV in the switching power supply device of the present embodiment. Also, when a comparison is made of the ripple voltage generated in switching from the step-up control mode to the step-down control mode, while it is 0.2 V in the switching power supply device of the prior art, it becomes 20 mV in the switching power supply device of the present embodiment. Consequently, it can be seen that significant improvement is realized for both changes of the control mode.

As explained above, for switching power supply device 1 in the present embodiment, for the step-down control mode/step-up control mode of the FB_PWM signal corresponding to the output voltage, feedback is provided for the primary circuit/secondary circuit. In this case, multiplexer 60 for switching the input sign of transconductance amplifier 40 corresponding to the control mode is present, so that before and after switching of the control mode, there is no variation in the output voltage of transconductance amplifier 40, that is, the duty ratio of the FB_PWM signal is kept constant, while it is possible to apply negative feedback in each control mode.

Switching power supply device 1 of the present embodiment has capacitor C1 with a relatively large capacitance for phase compensation at the output terminal of transconductance amplifier 40. The output voltage of transconductance amplifier 40 is always kept constant independent of the control mode. Consequently, the duty ratio of the generated FB_PWM signal is constant and independent of the charging state of capacitor C1. That is, before and after switching of the control mode, the ripple voltage generated in the output is very small and free of the influence of the transient characteristics of the charging voltage of capacitor C1. Consequently, it is possible to realize both phase compensation of the feedback system and reduction of the ripple voltage, properties that have formerly been opposed to each other.

The embodiment of the present invention is not limited to the aforementioned contents. Various modifications can be made as long as the gist of the present invention is observed.

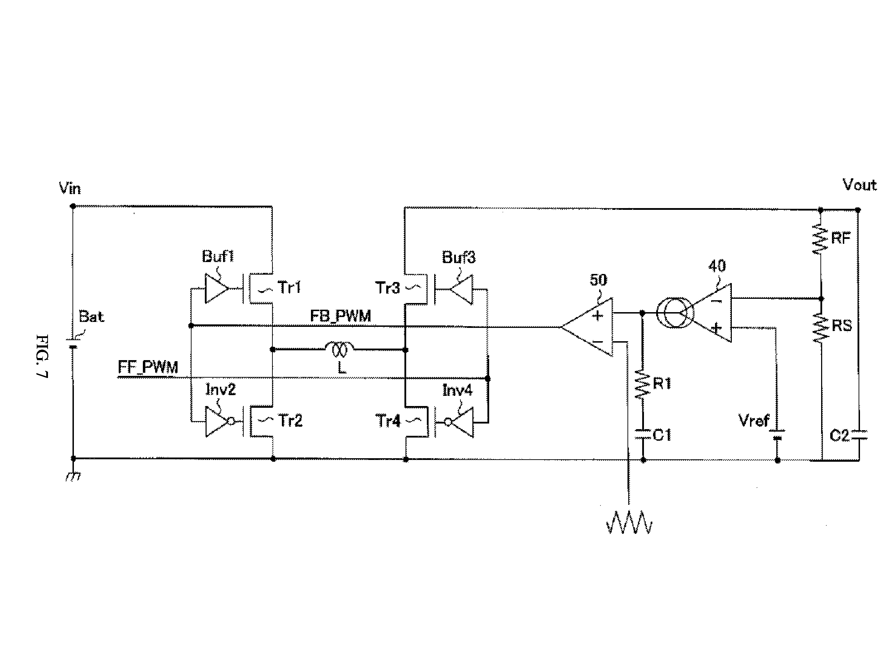

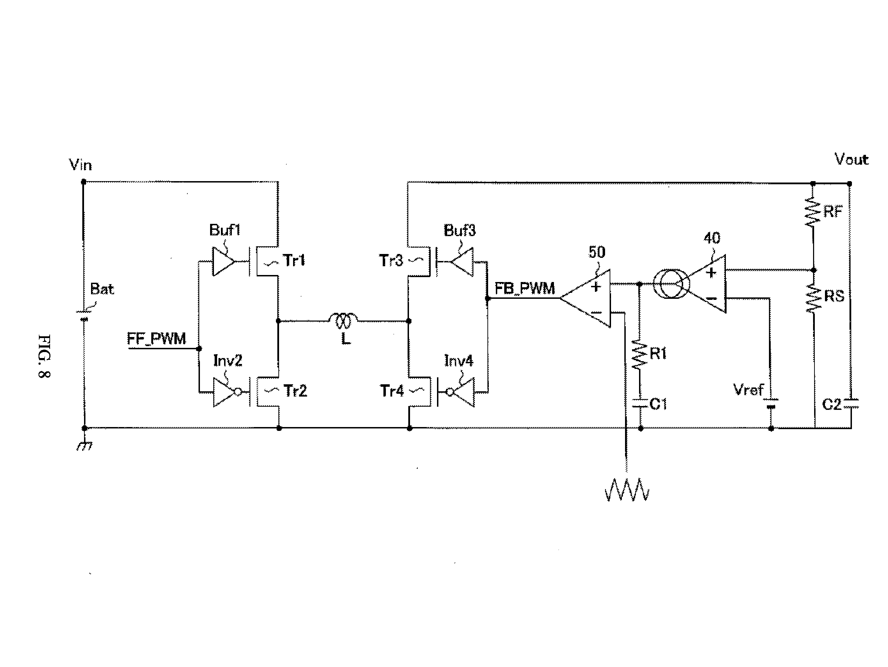

For example, FIG. 7 shows the equivalent circuit when the switching power supply device in a modified example is in the step-down control mode of operation. FIG. 8 shows the equivalent circuit when the switching power supply device in the modified example is in the step-up control mode of operation. The switching power supply devices shown in FIGS. 7 and 8 differ from switching power supply device 1 shown in FIGS. 4 and 5 in that the signs of the input terminals of transconductance amplifier 40 are reversed. That is, in the configuration shown in FIG. 7, the voltage obtained by voltage dividing output voltage Vout is fed back to the negative terminal. In the configuration shown in FIG. 8, the voltage obtained by voltage dividing output voltage Vout is fed back to the positive terminal. Also, the signs of comparator 50 are reversed with respect to those in switching power supply device 1 shown in FIGS. 4 and 5 so as to form a negative feedback. In this modified example, too, just as in the switching power supply device 1, the output voltage of transconductance amplifier 40 is always kept constant independent of the control mode. Consequently, independent of the charging state of capacitor C1, the duty ratio of the FB_PWM signal generated in this case is constant. As a result, before and after switching of the control mode, the ripple voltage generated in the output is very small and free of influence of the transient characteristics of the charging voltage of capacitor C1.

**Claims**

1. A switching power supply device comprising:

    a first switch comprised of plural switching elements for controlling the ON state of the input side;
    a second switch comprised of plural switching elements for controlling the ON state of the output side;
    a feedback pulse generator for generating a feedback pulse with a pulse width corresponding to the output voltage;
    a first control adapted and configured to switch among plural control modes, including at least a step-down control mode and a step-up control mode, corresponding to the input voltage; with the feedback pulse sent to the first switch in the step-down control mode and the feedback pulse sent to the second switch in the step-up control mode,;
    and a second control that controls the feedback pulse generator such that the duty ratio of the feedback pulse is constant and independent of the plural control modes.

2. The switching power supply device of Claim 1, wherein:

    the feedback pulse generator comprises a transconductance amplifier having a first input terminal connected to receive a voltage corresponding to the output voltage and a second input terminal connected to receive a reference voltage;
    and the second control adapted and configured to invert the polarities of the signals received at the first and second input terminals of the transconductance amplifier in correspondence with the step-down control mode and the step-up control mode.

3. The switching power supply device of Claim 2, wherein:

    the feedback pulse generator comprises a comparison circuit that compares the voltage at a node connected to a capacitive element with a triangular signal having a prescribed period; and the transconductance amplifier is set such that the output terminal of the transconductance amplifier is positioned nearer the output side than the node.

4. A switching power supply device comprising:

    a first switching element connected between the voltage input terminal and one of the terminals of an inductance element,
    a second switching element connected between the one terminal of the inductance element and a reference voltage;
    a third switching element connected between the voltage output terminal and the other terminal of the inductance element;
    a fourth switching element connected between the other terminal of the inductance element and the reference voltage;
    a feed-forward controller for feeding a forward control signal to the third switching element and fourth switching element or the first switching element and second switching element; and
    a feedback controller for feeding a feedback control signal to the first switching element and second switching element or the third switching element and fourth switching element;
    in a step-down mode of operation, the feed-forward control signal is fed to the third switching element and fourth switching element, and, simultaneously, the feedback control signal is fed to the first switching element and second switching element; and, in a step-up mode of operation, the feed-forward control signal is fed to the first switching element and second switching element, and, simultaneously, the feedback control signal is fed to the third switching element and fourth switching element;
    the feedback controller has a comparison circuit having a first terminal and a second terminal with signs opposite each other; in the step-down mode of operation, a voltage corresponding to the output voltage is fed to the first terminal, and, simultaneously, a reference voltage is fed to the second terminal; and, in the step-up mode of operation, the reference voltage is fed to the first terminal, and, simultaneously, a voltage corresponding to the output voltage is fed to the second terminal.

5. The switching power supply device of Claim 4, wherein the feedback controller has a comparator that takes the output signal of the comparison circuit and a triangular signal as input and generates a feedback control signal, and the comparison circuit is a current output type amplifier.

**6.** The switching power supply device as in Claim 4 or 5, wherein the feedback controller has an input switching circuit that switches the connection between the first terminal and second terminal of the comparison circuit to the voltage corresponding to the output voltage and the reference voltage.

FIG. 1

FIG. 2

FIG. 3

FIG. 4

FIG. 5

FIG. 6

FIG. 7

FIG. 8

FIG. 9

FIG. 10

FIG. 11

FIG. 12

EP 1 592 118 A1

**EP 1 592 118 A1**

**European Patent Office**

## EUROPEAN SEARCH REPORT

Application Number

EP 05 10 3345

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 211 791 A (NEC TOKIN CORPORATION) 5 June 2002 (2002-06-05) * paragraphs [0040], [0041]; figures 10,11; table 1 * ----- | 1,4 | H02M3/158 |
| A | US 5 831 418 A (KITAGAWA ET AL) 3 November 1998 (1998-11-03) * claim 1; figures 1-4 * ----- | 1,4 | |
| A | US 6 275 016 B1 (IVANOV VADIM V) 14 August 2001 (2001-08-14) * column 1, line 60 - line 63; figures 1,2,5 * ----- | 1,4 | |

TECHNICAL FIELDS SEARCHED (Int.Cl.7)

H02M

The present search report has been drawn up for all claims

| Place of search | Date of completion of the search | Examiner |
|---|---|---|
| The Hague | 10 August 2005 | Imbernon, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 592 118 A1**

| Patent document cited in search report | | Publication date | Patent family member(s) | | Publication date |
|---|---|---|---|---|---|
| EP 1211791 | A | 05-06-2002 | CN | 1445914 A | 01-10-2003 |
| | | | EP | 1211791 A1 | 05-06-2002 |
| | | | JP | 3484636 B2 | 06-01-2004 |
| | | | JP | 2002238250 A | 23-08-2002 |
| | | | US | 2002101745 A1 | 01-08-2002 |
| US 5831418 | A | 03-11-1998 | JP | 10225108 A | 21-08-1998 |
| US 6275016 | B1 | 14-08-2001 | WO | 02065227 A1 | 22-08-2002 |